# EUROPÄISCHE PATENTANMELDUNG

(11) **EP 1 845 676 A1**
(43) Veröffentlichungstag der Anmeldung: **17.10.2007**
(21) Anmeldenummer: 06007882.1
(22) Anmeldetag: 13.04.2006
(51) Int. Cl.: H04L 12/66

(54) **Verfahren zur Videotelefonie zwischen einem ersten Endgerät in einem leitungsvermittelten Datennetz und einem zweiten Endgerät in einem paketvermittelten Datennetz**

(71) Anmelder: SIEMENS AKTIENGESELLSCHAFT, 80333 München (DE)
(72) Erfinder: Seitter, Norbert, 82008 Unterhaching (DE); Trapp, Andreas, 81241 München (DE)

(57) **Zusammenfassung**

Die Erfindung betrifft ein Verfahren zur Videotelefonie zwischen einem ersten Endgerät (MS1) in einem leitungsvermittelten Datennetz (CS) und einem zweiten Endgerät (MS2) in einem paketvermittelten Datennetz (IMS), bei dem: ein Daten-Träger im leitungsvermittelten Datennetz zwischen dem ersten Endgerät (MS1) und einem Zugangsknoten (IM-MGW) des paketvermittelten Datennetzes (IMS) aufgebaut wird; ein Transport-Träger im paketvermittelten Datennetz (IMS) zwischen dem Zugangsknoten (IM-MGW) des paketvermittelten Datennetzes (IMS) und dem zweiten Endgerät (MS2) aufgebaut wird; Videotelefoniedaten als kombinierter Sprach- und Videostrom im leitungsvermittelten Datennetz (CS) und im paketvermittelten Datennetz (IMS) übertragen werden, wobei zum Transport der Videotelefoniedaten im leitungsvermittelten Datennetz (CS) der Daten-Träger und im paketvermittelten Datennetz der Transport-Träger verwendet wird.

## Beschreibung

Die Erfindung betrifft ein Verfahren zur Videotelefonie zwischen einem ersten Endgerät in einem leitungsvermittelten Datennetz, insbesondere in einem Mobilfunktelefonnetz, und einem zweiten Endgerät in einem paketvermittelten Datennetz.

In der 3GPP-Standardisierung wurden bereits Verfahren beschrieben, welche das Zusammenwirken zwischen einem paketvermittelten IMS-Netz (IMS = IP Multimedia Subsystem) und einem leitungsvermittelten CS-Netz (CS = Circuit Switched) oder einem öffentlichen Telefonnetz PSTN (PSTN = Public Switched Telephone Network) für Sprachtelefonie beschreiben. Für Videotelefonie, bei der Sprach- und Videodaten gemeinsam übertragen werden, sind bis heute nur Übertragungen zwischen zwei CS-Netzteilnehmern bzw. zwischen zwei IMS-Teilnehmern bzw. zwischen einem CS-Teilnehmer und einem PSTN-Teilnehmer im Standard definiert. Es gibt derzeit noch kein standardisiertes Verfahren, welches Videotelefonie zwischen einem leitungsvermittelten Datennetz und einem paketvermittelten Datennetz festlegt.

Aufgabe der Erfindung ist es deshalb, ein Verfahren zur Videotelefonie zu schaffen, welches den Austausch von Videotelefoniedaten zwischen einem Endgerät in einem leitungsvermittelten Datennetz und einem Endgerät in einem paketvermittelten Datennetz ermöglicht.

Diese Aufgabe wird durch die unabhängigen Patentansprüche gelöst. Weiterbildungen der Erfindung sind in den abhängigen Ansprüchen definiert.

Gemäß dem erfindungsgemäßen Verfahren wird ein Daten-Träger, der insbesondere der aus dem Stand der Technik bekannte BS30-Bearer ist, im leitungsvermittelten Datennetz von einem ersten Endgerät in diesem Datennetz zu einem Zugangsknoten des paketvermittelten Datennetzes aufgebaut. Demgegenüber wird auf Seiten des paketvermittelten Datennetzes ein Transport-Träger, insbesondere ein RTP-Träger (RTP = Realtime Protocol), zwischen dem Zugangsknoten des paketvermittelten Datennetzes und einem zweiten Endgerät in diesem Datennetz aufgebaut. Die Videotelefoniedaten werden hierbei als kombinierter Sprach- und Videostrom sowohl im leitungsvermittelten Datennetz als auch im paketvermittelten Datennetz übertragen, wobei zum Transport der Videotelefoniedaten im leitungsvermittelten Datennetz der Daten-Träger und im paketvermittelten Datennetz der Transport-Träger verwendet wird.

Gemäß dem erfindungsgemäßen Verfahren müssen auf Seiten des leitungsvermittelten Datennetzes keine Änderungen an der bestehenden Infrastruktur vorgenommen werden, da die heutzutage bereits verwendeten Daten-Träger, insbesondere der BS30-Träger, weiterhin eingesetzt werden können. Bei diesem Träger findet eine Kombination, insbesondere ein Multiplexen, von Sprach- und Videodaten in einem einzigen Datenstrom statt. Es müssen gemäß dem erfindungsgemäßen Verfahren nur Änderungen auf Seiten des paketvermittelten Netzes vorgenommen werden, insbesondere muss in dem paketvermittelten Netz sichergestellt sein, dass ein einzelner Transport-Bearer zur Übertragung des kombinierten Sprach- und Videostroms bereitgestellt werden kann.

In einer bevorzugten Ausführungsform wird das erfindungsgemäße Verfahren in leitungsvermittelten und/oder paketvermittelten Mobilfunknetzen, insbesondere in GSM- und/oder UMTS-Netzen eingesetzt. Als Datentransport in dem leitungsvermittelten Datennetz wird in einer Ausführungsform der Erfindung ATM (ATM = Asynchronous Transfer Mode) und/oder IP (IP = Internet Protocol) verwendet, wobei als Signalisierungs-Protokoll für diesen Datentransport BICC (BICC = Bearer Independent Call Control) verwendet wird. Es ist jedoch auch möglich, dass der Datentransport über TDM (TDM = Time Division Multiplexing) erfolgt, wobei in diesem Fall als Signalisierungs-Protokoll ISUP eingesetzt wird.

In einer besonders bevorzugten Ausführungsform ist das paketvermittelte Netz das hinlänglich aus dem Stand der Technik bekannte IMS-Netz, welches als Signalisierungs-Protokoll SIP (SIP = Session Initiation Protocol) und für den Datentransport IP verwendet. Dieses Netz enthält die bekannten Komponenten MGCF (MGCF = Media Gateway Control Function), IM-MGW (IM-MGW = IP Multimedia Media Gateway) und CSCF (CSCF = Call State Control Function). Der Zugangsknoten des paketvermittelten Datennetzes umfasst hierbei in Bezug auf den Datentransport den IM-MGW. In Bezug auf die Signalisierung stellt die MGCF den Zugangsknoten zum IMS-Netz dar.

Um den Aufbau des Transport-Trägers, insbesondere des RTP-Trägers, im IMS-Netz zu ermöglichen, werden in dem erfindungsgemäßen Verfahren eine oder mehrere SignalisierungsNachrichten zwischen MGCF, CSCF und dem zweiten Endgerät im SIP-Protokoll ausgetauscht, wobei die Signalisierungsnachrichten jeweils signalisieren, einen einzigen Transport-Träger zum Transport des kombinierten Sprach- und Videostroms im IMS-Netz (IMS) zu verwenden. Insbesondere stellt die MGCF in dem entsprechenden IM-MGW einen einzelnen Transport-Träger zum Transport der Videotelefoniedaten ein. Hierbei kommunizieren die MGCF und das IM-MGW vorzugsweise über die Mn-Schnittstelle basierend auf dem H.248-Protokoll miteinander, wobei zum Einstellen des einzelnen Transport-Trägers im IM-MGW eine entsprechende H.248-Nachricht von der MGCF zu dem IM-MGW gesendet wird.

In einer weiteren Ausführungsform des erfindungsgemäßen Verfahrens werden die Videotelefoniedaten in dem paketvermittelten Datennetz transparent in RTP-Datenpaketen transportiert, insbesondere gemäß dem Standard RFC 4040 ("RTP Payload Format for a 64 kbit/s Transparent Call", siehe http://www.ietf.org/rfc/rfc4040.txt).

Vorzugsweise wird bei der Übertragung der Videotelefoniedaten der aus dem Stand der Technik bekannte Protokollstack von H.324M verwendet. Es wird darauf hingewiesen, dass die hier und in folgenden bezeichneten Standards H.xxx dem Fachmann hinlänglich bekannt sind und Empfehlungen der ITU-T sind.

In einer bevorzugten Ausführungsform findet nach dem Ende-zu-Ende-Aufbau der Datenverbindung umfassend den Daten-Träger und den Transport-Träger eine Inband-Codec-Aushandlung zwischen dem ersten und zweiten Endgerät gemäß H.245 statt und der kombinierte Sprach- und Videostrom ist gemäß H.223 (Annex A und B) gemultiplext.

Neben dem oben beschriebenen Verfahren betrifft die Erfindung ferner ein Endgerät, insbesondere ein IMS-Endgerät, welches derart ausgestaltet ist, dass es bei der Durchführung des Verfahrens die Funktion des zweiten Endgeräts übernehmen kann. Ein solches Endgerät kann demnach kombinierte Sprach- und Videodaten über einen einzelnen Transport-Träger empfangen und aussenden und ist insbesondere derart ausgebildet, dass es einen BS30-Bearer und den H.324M-Protokollstack verarbeiten kann.

Die Erfindung betrifft darüber hinaus ein paketvermitteltes Datennetz, insbesondere ein IMS-Netz, welches derart ausgestaltet ist, dass in dem Datennetz Videotelefoniedaten gemäß dem erfindungsgemäßen Verfahren übertragen werden können. Insbesondere ist das paketvermittelte Datennetz derart ausgestaltet, dass es ein Signalisierungsprotokoll verarbeiten kann, in dem der Aufbau eines einzelnen Transport-Trägers zur Übertragung eines kombinierten Sprach- und Videostroms signalisiert werden kann.

Ausführungsbeispiele der Erfindung werden nachfolgend anhand der beigefügten Figuren detailliert beschrieben.

Es zeigen:
- Fig. 1: eine schematische Darstellung des Zusammenwirkens eines leitungsvermittelten Datennetzes mit einem paketvermittelten Datennetz zur Videotelefonie gemäß dem erfindungsgemäßen Verfahren; und
- Fig. 2A und 2B: ein Flussdiagramm, welches den Signalisierungsablauf am Netzübergang mittels MGCF und IM-MGW zum Aufbau einer Videotelefonie-Verbindung gemäß einer Ausführungsform des erfindungsgemäßen Verfahrens wiedergibt.

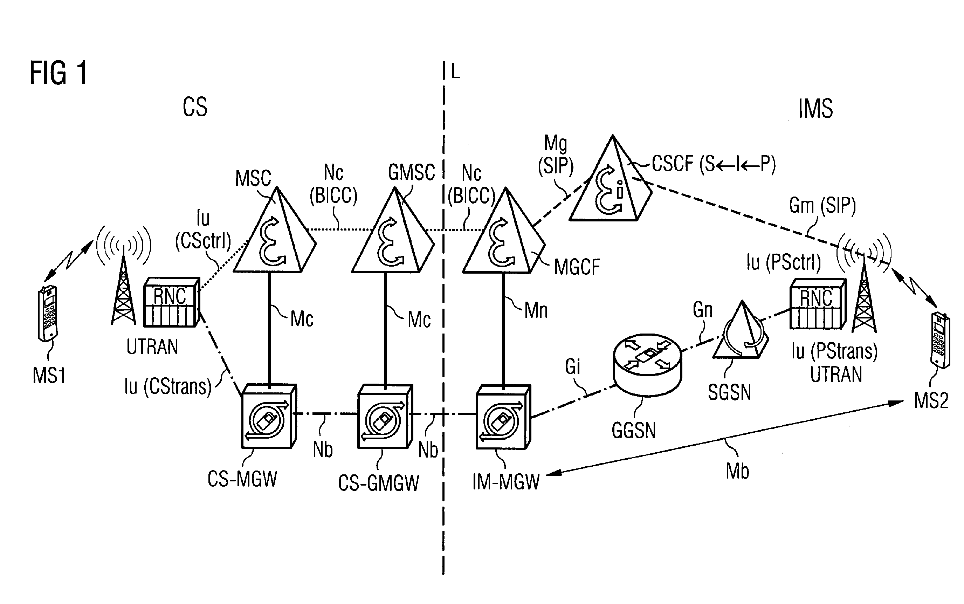

Nachfolgend wird anhand von Fig. 1 das erfindungsgemäße Videotelefonie-Verfahren am Beispiel des Zusammenwirkens eines leitungsvermittelten UMTS-Mobilfunknetzes CS (CS = Circuit Switched) mit einem paketvermittelten UMTS-Mobilfunknetz IMS (IMS = IP Multimedia Subsystem) beschrieben. Der Übergang zwischen dem CS-Netz und dem IMS-Netz ist durch eine vertikale gestrichelte Linie L angedeutet. Die im Folgenden erwähnten einzelnen Komponenten und Schnittstellen des CS- und IMS-Netzes sind an sich bekannt und werden deshalb nicht detailliert erläutert.

Es ist in Fig. 1 ein Szenario wiedergegeben, bei dem eine Videotelefonie-Verbindung zwischen einem Mobiltelefon MS1 auf der CS-Seite und einem Mobiltelefon MS2 auf der IMS-Seite besteht. Das Mobiltelefon MS1 ist über die Luftschnittstelle im Funknetz UTRAN mit dem Radio Network Controller RNC verbunden, der wiederum über entsprechende Iu-Schnittstellen mit Knoten im CS-Netz verbunden ist. Es existiert hierbei eine Verbindung zum eigentlichen Datentransport über die Schnittstelle Iu (CStrans) hin zu dem CS-MGW (CS-MGW = Cirucuit Switched Media Gateway) sowie eine Verbindung zur Signalisierung und Kontrolle des Transports über die Schnittstelle Iu (CSctrl) zu einem MSC-Server (MSC = Mobile Switching Center).

Zur Signalisierung der Transportverbindung ist der MSC über eine Nc-Schnittstelle mit einem GMSC (GMSC = Gateway Mobile Switching Center) verbunden, der den Übergang zu dem IMS-Netz darstellt. Der Übergang zum IMS-Netz erfolgt hierbei wiederum über eine Nc-Schnittstelle, die mit einem Zugangsknoten MGCF (MGCF = Media Gateway Control Function) im IMS-Netz verbunden ist. Der eigentliche Datentransport erfolgt auf der CS-Seite über den bereits erwähnten CS-MGW mittels einer Nb-Schnittstelle hin zu einem CS-GMGW (CS-GMGW = Circuit Switched Gateway Media Gateway), der über eine weitere Nb-Schnittstelle mit dem Zugangsknoten IM-MGW des IMS-Netzes verbunden ist (IM-MGW = IMS Media Gateway).

Zur Signalisierung wird auf der CS-Seite vom RNC über den MSC und den GMSC hin zur MGCF das so genannte BICC-Protokoll verwendet (BICC = Bearer Independent Call Control). Die Teilstücke, auf denen das BICC-Protokoll eingesetzt wird, sind durch gepunktete Linien in Fig. 1 angedeutet. Die zur Signalisierung verwendeten Server MSC und GMSC sind über so genannte Mc-Schnittstellen mit dem CS-MGW bzw. dem CS-GMGW verbunden und kontrollieren diese Rechner. Der Transport erfolgt in dem Ausführungsbeispiel der Fig. 1 auf der CS-Seite auf der Basis von ATM (ATM = Asynchronous Transfer Mode) bzw. IP (IP = Internet Protocol). Als Trägerkanal wird ein so genannter BS30-Bearer verwendet, der vom UTRAN über den CS-MGW und den CS-GMGW zum IM-MGW reicht. Der BS30-Bearer ist hinlänglich in leitungsvermittelten Netzen bekannt und dient zur Übertragung von kombinierten Sprach- und Videodaten mit einer Kapazität von 64 kbit/sec.

Auf der Seite des IMS-Netzes werden zum Datentransport neben dem IM-MGW ein GGSN (GGSN = Gateway GPRS Support Node) sowie ein SGSN (SGSN = Serving GPRS Support Node) im Kernnetz verwendet. Der GGSN übernimmt Routing-Funktionen und ist über die Schnittstelle Gi mit dem IM-MGW verbunden. Zwischen dem GGSN und dem SGSN besteht eine Gn-Schnittstelle. Der SGSN koordiniert den Übergang vom Kernnetz des IMS-Netzes hin zum Funknetz UTRAN, welches mit dem Mobiltelefon MS2 verbunden ist. Der Transport vom SGSN hin zum RNC des UTRANs erfolgt über die Schnittstelle Iu (PStrans) . Die gesamte Transportverbindung zwischen dem IM-MGW und dem Endgerät MS2 wird auch als Mb-Schnittstelle bezeichnet. Zur Signalisierung des paketbasierten Datentransports wird eine so genannte CSCF (CSCF = Call State Control Function) eingesetzt, die mittels des SIP-Protokolls (SIP = Session Initiation Protocol) zum einen mit dem MGCF über eine Mg-Schnittstelle und zum anderen mit dem Endgerät MS2 über eine Gm-Schnittstelle kommuniziert. Die Signalisierung über das SIP-Protokoll ist in Fig. 1 mit einer gestrichelten Linie angedeutet.

Bei einer Videotelefonie-Verbindung auf Seiten des IMS-Netzes wird üblicherweise das RTP-Protokoll (RTP = Real-Time Transport Protocol) verwendet, das über UDP (UDP = User Datagram Protocol) betrieben wird und bei dem die einzelnen RTP-Pakete mit Zeitstempeln versehen sind. Es werden hierbei zwei getrennte Transportverbindungen, -d.h. zwei getrennte RTP-Träger/Bearer für Sprache und Video aufgebaut, die parallel übertragen werden. Diese parallelen RTP-Medienströme können dann über die Zeitstempel synchronisiert werden, wobei die Zeitstempel über das RTCP-Protokoll (RTCP = Real-Time Control Protocol) ausgehandelt werden.

Bei einer reinen Videotelefonie-Verbindung zwischen IMS-Endgeräten erfolgt der Aufbau des Trägerkanals Out-Of-Band mittels SDP (SDP = Session Description Protocol), das in SIP transportiert wird. Als Video-Codec wird der ITU-Standard H.263 vorgeschrieben, wobei optional auch H.264 bzw. MP4V-ES verwendet werden kann. Als Sprach-Codec werden NB-AMR und WB-AMR vorgeschrieben. Wie bereits erwähnt, werden herkömmlicherweise zwei getrennte RTP-Bearer für Sprache und Video verwendet, wobei unterschiedliche RTP-Payload-Formate eingesetzt werden.

Gemäß dem hier beschriebenen erfindungsgemäßen Verfahren wird zur Videotelefonie zwischen einem CS-Endgerät und einem IMS-Endgerät darauf verzichtet, auf der IMS-Seite zwei getrennte RTP-Bearer für Sprache und Video zu verwenden. Stattdessen wird ein einzelner RTP-Bearer aufgebaut, mit dem die Videotelefoniedaten, die auf der CS-Seite über den BS30-Bearer übertragen werden, in RTP-Paketen transportiert werden. Die Übertragung der Videotelefoniedaten ist in Fig. 1 durch eine strichpunktierte Linie angedeutet. Hierbei muss es möglich sein, dass der BS30-Bearer über die MGCF mittels SIP mit dem IMS-Endgerät MS2 ausgehandelt werden kann. Gleichzeitig ist es erforderlich, dass die MGCF im IM-MGW einen 64kbit/sec-Bearer, das heißt einen Bearer, dessen Datenübertragungs-Kapazität dem BS30-Bearer entspricht, einstellen kann. Darüber hinaus muss ein IMS-Endgerät verwendet werden, welches den BS30-Bearer für Videotelefonie verarbeiten kann. Dies bedeutet, dass das Endgerät die auf der CS-Seite verwendeten Codecs, die verwendete Codec-Verhandlung sowie das verwendete Transportprotokoll verarbeiten können muss. Insbesondere ist es erforderlich, dass das IMS-Endgerät den ITU-T-Standard H.324M (H.324 Annex C) versteht, der einen Multimedia-Protokollstack darstellt. Ferner muss eine Inband-Aushandlung der Codecs gemäß H.245 im IMS-Endgerät zur Verfügung stehen. Darüber hinaus muss der Video-Codec H.263 und gegebenenfalls auch die optionalen Codecs H.261 und MP4V-ES sowie zur Sprachcodierung NB-AMR und optional WB-AMR unterstützt werden. Beim Transport von Videotelefoniedaten auf der CS-Seite werden die Sprach- und Videodaten als gemultiplexter Sprach- und Videostrom übertragen, wobei das Multiplexen gemäß H.223 Annex A und B erfolgt. Deshalb muss das IMS-Endgerät auch dieses Protokoll verstehen.

Gemäß dem erfindungsgemäßen Verfahren wird somit durch eine Ende-zu-Ende-Verbindung zwischen den beiden Endgeräten MS1 und MS2 ein gemultiplexter Video- und Sprachdatenstrom transportiert, wobei zum Transport auf CS-Seite der BS30-Bearer und zum Transport auf IMS-Seite ein einzelner RTP-Bearer verwendet wird. Zum Transport der Daten auf der IMS-Seite zwischen dem IM-MGW und dem Endgerät MS2 wird der gemultiplexte Datenstrom transparent in RTP-Paketen übertragen, wobei dieser transparente Transport beispielsweise gemäß RFC4040 (siehe http://www.ietf.org/rfc/rfc4040.txt).

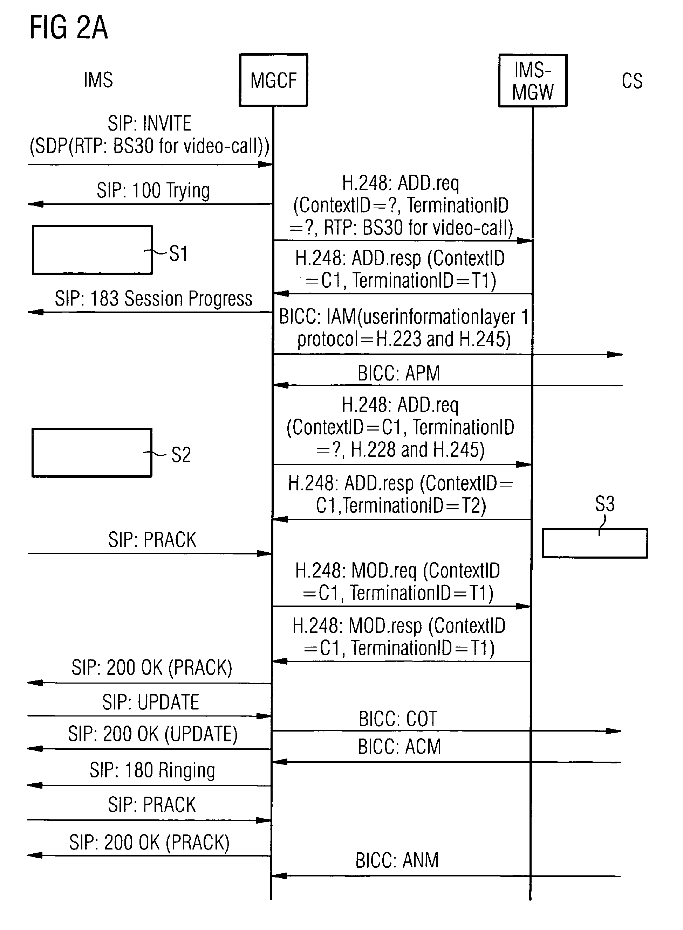

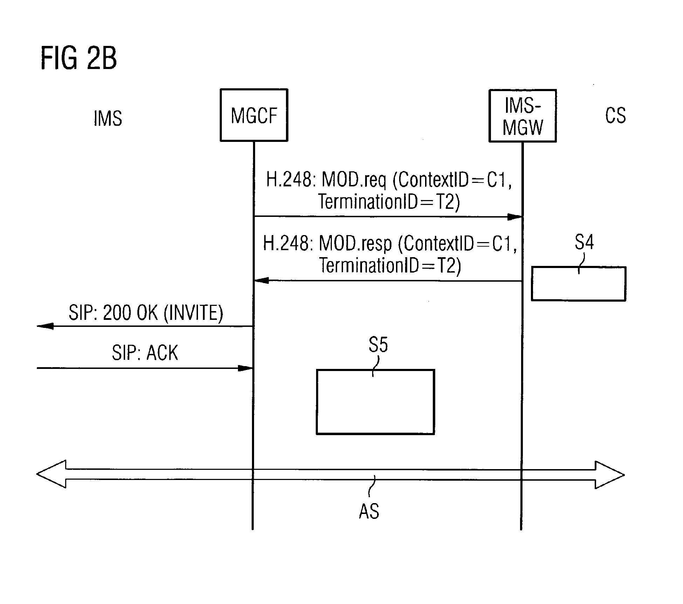

Fig. 2A und Fig. 2B zeigen beispielhaft den Ablauf der Signalisierung beim Aufbau einer Videotelefonie-Verbindung von dem Endgerät MS2 auf der IMS-Seite hin zu dem Endgerät MS1 auf der CS-Seite. Wie bereits erwähnt, wird auf der IMS-Seite das SIP-Protokoll zur Signalisierung und auf der CS-Seite das BICC-Protokoll verwendet. Zur Signalisierung zwischen der MGCF und dem IMS-MGW wird das hinlänglich aus dem Stand der Technik bekannte H.248-Protokoll verwendet. Es wird im Folgenden nicht auf alle einzelnen, in Fig. 2A und 2B dargestellten Nachrichten eingegangen, da der Nachrichtenfluss an sich bekannt ist. Es werden lediglich die sich vom Stand der Technik unterscheidenden Nachrichten erläutert. Die einzelnen Blöcke S1, S2, S3, S4 und S5 in Fig. 2A und Fig. 2B stehen hierbei für Verfahrensschritte, welche an der Position des jeweiligen Blocks im Ablaufdiagramm gerade durchgeführt werden.

Zunächst wird eine SIP:INVITE-Nachricht vom IMS-Endgerät ausgesendet, in der signalisiert wird, dass ein RTP-Bearer für BS30 zur Videotelefonie aufgebaut werden soll. Die Nachricht lautet gemäß Fig. 2A "SIP:INVITE (SDP(RTP:BS30 for video-call))". Nach dem Aussenden der SIP:INVITE-Nachricht erfolgt ein Nachrichtenaustausch zwischen MGCF und IMS-MGW mit dem H.248-Protokoll. Insbesondere wird mit der Nachricht "H.248:add.req(ContextID=?,TerminationID=?, RTP:BS30 for video-call)" dem IMS-MGW signalisiert, einen RTP-Bearer für BS30 bereitzustellen. Im Schritt S1 wird ein IMS-Verbindungspunkt reserviert und die entfernten Ressourcen konfiguriert. Es liegt der Status "ChangeThrough-Connection=backward" vor. Anschließend erfolgen weitere Signalisierungsschritte zwischen der MGCF und der CS-Seite über das BICC-Protokoll sowie weitere H.248-Signalisierungs-Nachrichten zwischen MGCF und IM-MGW. Im Schritt S2 wird der Bearer aufgebaut (Status: "ChangeThrough-Connection=both") und im Schritt S3 wird der Bearer-Aufbau inklusive der User-Plane-Initialisierung abgeschlossen. Es folgen dann aus dem Stand der Technik bekannte Signalisierungen, bei denen das IMS-Endgerät versucht, eine Videotelefonie-Verbindung mit dem Endgerät auf CS-Seite herzustellen. Nachdem das Endgerät auf CS-Seite abhebt, wird die Videotelefonie-Verbindung zwischen IMS-Seite und CS-Seite im Schritt S4 schließlich durchgeschaltet (Status: "IMS/CS Through-Connection=both"). Es erfolgt dann im Schritt S5 die H.245-Inband-Codec-Verhandlung, bei der die Rollen von Master und Slave definiert werden, die Profile für Sprache und Video ausgetauscht werden, sowie die Kanäle für die Adaptionsschicht geöffnet werden. Anschließend befindet sich die Videotelefonie-Verbindung in dem aktiven Zustand AS, wie durch einen Doppelpfeil angedeutet ist.

Bei dem soeben beschriebenen Rufaufbau ist zu beachten, dass das IMS-Endgerät normalerweise zwei RTP-Bearer für Videotelefonie aufbaut. Das heißt, das IMS-Endgerät wird eine SIP:INVITE für zunächst zwei getrennte RTP-Bearer zur MGCF signalisieren. Die zwischengeschaltete CSCF stellt jedoch fest, dass die Videoverbindung hin zu der CS-Domäne geroutet werden soll. Somit wird die CSCF keine zwei RTP-Bearer, sondern nur einen RTP-Bearer für BS30 in der SIP:INVITE hin zur MGCF senden. Zusätzlich benachrichtigt die CSCF das IMS-Endgerät, für die Videoverbindung auch nur einen einzigen RTP-Bearer für BS30 zu verwenden.

## Patentansprüche

1. Verfahren zur Videotelefonie zwischen einem ersten Endgerät (MS1) in einem leitungsvermittelten Datennetz (CS) und einem zweiten Endgerät (MS2) in einem paketvermittelten Datennetz (IMS), bei dem:
- ein Daten-Träger im leitungsvermittelten Datennetz zwischen dem ersten Endgerät (MS1) und einem Zugangsknoten (IM-MGW) des paketvermittelten Datennetzes (IMS) aufgebaut wird;
- ein Transport-Träger im paketvermittelten Datennetz (IMS) zwischen dem Zugangsknoten (IM-MGW) des paketvermittelten Datennetzes (IMS) und dem zweiten Endgerät (MS2) aufgebaut wird;
- Videotelefoniedaten als kombinierter Sprach- und Videostrom im leitungsvermittelten Datennetz (CS) und im paketvermittelten Datennetz (IMS) übertragen werden, wobei zum Transport der Videotelefoniedaten im leitungsvermittelten Datennetz (CS) der Daten-Träger und im paketvermittelten Datennetz der Transport-Träger verwendet wird.

2. Verfahren nach Anspruch 1, bei dem das leitungsvermittelte Datennetz ein Telefonnetz, insbesondere ein Mobilfunktelefonnetz ist, und/oder das paketvermittelte Datennetz ein Mobilfunknetz, insbesondere ein GSM- und/oder UMTS-Netz ist.

3. Verfahren nach Anspruch 1 oder 2, bei dem der Daten-Träger im leitungsvermittelten Datennetz ein BS30-Bearer ist und/oder der Transport-Träger im paketvermittelten Datennetz ein RTP-Bearer ist.

4. Verfahren nach einem der vorhergehenden Ansprüche, bei dem der Datentransport in dem leitungsvermittelten Datennetz (CS) über ATM und/oder IP erfolgt, wobei als Signalisierungsprotokoll BICC verwendet wird.

5. Verfahren nach einem der Ansprüche 1 bis 3, bei dem der Datentransport in dem leitungsvermittelten Datennetz (CS) über TDM erfolgt, wobei als Signalisierungsprotokoll ISUP verwendet wird.

6. Verfahren nach einem der vorhergehenden Ansprüche, bei dem das paketvermittelte Datennetz (IMS) ein IMS-Netz umfassend die Komponenten MGCF, IM-MGW und CSCF ist, wobei der Zugangsknoten des paketvermittelten Datennetzes den IM-MGW umfasst.

7. Verfahren nach Anspruch 6, bei dem zur Signalisierung des Aufbaus des Transport-Trägers eine oder mehrere Signalisierungsnachrichten zwischen der MGCF, der CSCF und dem zweiten Endgerät (MS2) im SIP-Protokoll ausgetauscht werden, wobei die Signalisierungsnachrichten jeweils signalisieren, einen einzigen Transport-Träger, insbesondere einen einzigen RTP-Bearer, zum Transport des kombinierten Sprach- und Videostroms im IMS-Netz (IMS) zu verwenden.

8. Verfahren nach Anspruch 7, bei dem die MGCF in dem IM-MGW einen einzelnen Transport-Träger zum Transport der Videotelefoniedaten einstellt.

9. Verfahren nach Anspruch 8, bei dem die MGCF und das IM-MGW über die Mn-Schnittstelle basierend auf dem H.248-Protokoll miteinander kommunizieren, wobei zum Einstellen des einzelnen Transport-Trägers im IM-MGW eine entsprechende H.248-Nachricht von der MGCF zu dem IM-MGW gesendet wird.

10. Verfahren nach einem der vorhergehenden Ansprüche, bei dem die Videotelefoniedaten in dem paketvermittelten Datennetz (IMS) transparent in RTP-Datenpaketen transportiert werden, insbesondere gemäß RFC 4040.

11. Verfahren nach einem der vorhergehenden Ansprüche, bei dem die Videotelefoniedaten auf der Basis des Protokollstacks von H.324M übertragen werden.

12. Verfahren nach Anspruch 11, bei dem nach dem Ende-zu-Ende-Aufbau einer Datenverbindung umfassend den Daten-Träger und den Transport-Träger eine Inband-Codec-Aushandlung zwischen dem ersten und zweiten Endgerät (MS1, MS2) gemäß H.245 stattfindet.

13. Verfahren nach Anspruch 11 oder 12, bei dem der kombinierte Sprach- und Videostrom gemäß H.223 gemultiplext ist.

14. Endgerät zur Verwendung in einem Verfahren nach einem der vorhergehenden Ansprüche, wobei das Endgerät (MS2) derart ausgestaltet ist, dass es bei der Durchführung des Verfahrens nach einem der vorhergehenden Ansprüche die Funktion des zweiten Endgeräts (MS2) übernehmen kann.

15. Endgerät nach Anspruch 14, bei dem das Endgerät (MS2) derart ausgestaltet ist, dass es kombinierte Sprach- und Videodaten verarbeiten kann und über einen einzelnen Transport-Träger empfangen und aussenden kann.

16. Endgerät nach Anspruch 15, wobei das Endgerät einen BS30-Bearer und den H.324M-Protokollstack verarbeiten kann.

17. Paketvermitteltes Datennetz, insbesondere IMS-Netz, welches derart ausgestaltet ist, dass in dem Datennetz Videotelefoniedaten gemäß dem Verfahren nach einem der Ansprüche 1 bis 13 übertragen werden können.

18. Paketvermitteltes Datennetz nach Anspruch 17, bei dem das paketvermittelte Datennetz (IMS) ein Signalisierungsprotokoll verarbeiten kann, in dem der Aufbau eines einzelnen Transport-Trägers zur Übertragung eines kombinierten Sprach- und Videostroms signalisiert werden kann.
